# EUROPEAN PATENT SPECIFICATION

(11) **EP 0 967 884 B1**
(45) Date of publication and mention of the grant of the patent: **12.01.2005**
(21) Application number: 98905594.2
(22) Date of filing: 18.02.1998
(51) Int. Cl.: A23J 1/20

(54) **PROCESS FOR THE MANUFACTURE OF MILK PROTEINS**
VERFAHREN ZUR HERSTELLUNG VON MILCHPROTEINEN
PROCEDE DE PRODUCTION DE PROTEINES DU LAIT

(30) Priority: 21.02.1997 IE 970105
(43) Date of publication of application: 05.01.2000
(73) Proprietor: TEAGASC, THE AGRICULTURE AND FOOD DEVELOPMENT AUTHORITY, Dublin 4 (IE)
(72) Inventor: KELLY, Philip, M., Doneraile County Cork (IE); O'KENNEDY, Brendan, T., Dungarvan County Waterford (IE)
(74) Representative: Gates, Marie Christina Esther
(86) International application number: PCT/IE1998/000012
(87) International publication number: WO 1998/036647

(56) References cited:
- EP-A- 0 115 651
- DE-A- 3 445 223
- FR-A- 2 407 674
- FR-A- 2 583 267
- H. MODLER: "Properties of whey protein concentrate prepared by heating under acidic conditions" JOURNAL OF DAIRY SCIENCE, vol. 60, no. 2, 1977, CHAPAIGN, ILLINOIS US, pages 177-184, XP002065083
- CHEMICAL ABSTRACTS, vol. 81, no. 10, 11 November 1974 Columbus, Ohio, US; abstract no. 118699k, A. JACYK: "Separation of proteins and calcium and phosphorous compounds from whey" XP002065085 & ZESZ. NAUK. AKAD. ROLN.-TECH. OLTSZTYNIE, TECHNOL. ZYWN, vol. 2, 1973, pages 19-27,
- V. RACOTTA: "Use of whey proteins for supplementing tortilla" JOURNAL OF AGRICULTURAL AND FOOD CHEMISTRY., vol. 27, no. 4, 1979, WASHINGTON US, pages 668-672, XP002065084
- OYSUN G ET AL: "HITZEDENATURIERUNG VON MOLKENPROTEINEN BEI VERSCHIEDENEM PH" MILCHWISSENSCHAFT, vol. 44, no. 2, 1989, pages 87-89, XP000007461

## Description

The present invention relates to a method for the isolation of the total milk protein content from milk. The product is suitable for use in food formulations and dietetic products.

In particular, the product of the present invention will perform as well as sodium caseinate in food formulations, such as in enhancing the consistency of yoghurt and regulating the texture of processed cheese, but with the added benefit of having more bland flavour characteristics. When used in dietetic preparations the product of the invention is superior to sodium caseinate because it has enhanced nutritional properties due to the incorporation of whey proteins, and it has better flavour characteristics.

In the present context functional relates to the role of ingredients in imparting desirable effects on the texture and consistency of the food product into which it is incorporated e.g. emulsification or emulsion stability, viscosity enhancement, water-binding and foaming/whipping ability.

The protein content of milk comprises of caseins ( 80% of total protein content) and whey proteins including non-protein nitrogen (20%). Casein is usually isolated industrially from milk by means of precipitation either at its isoelectric pH of 4.6 or in its paracasein form by enzymatic coagulation of milk. In the former case, it is necessary to resolubilise the precipitated curd by neutralisation with a suitable alkali such as sodium hydroxide. Whey proteins are soluble under these conditions, and this distinguishing feature has led to the development of a range of technologies which are now widely used for the production of whey protein concentrates (protein content typically in the range of 20-80%) and whey protein isolates (protein content >90%). Over time industrial manufacture has therefore tended to evolve around the manufacture of these two distinct groups of proteins, which are marketed as such or occasionally blended together, sometimes with other ingredients, to produce certain functional characteristics and/or economic benefit in food formulations. For example, sodium caseinate is blended with whey protein concentrate (and maybe other ingredients such as buttermilk powder and/or skim milk powder) to produce a blended or so-called "tailor-made" ingredient for use in yoghurt manufacture.

Isolating the complete complement of protein in milk in a single manufacturing step offers the prospect of increasing yield and extending functional attributes of protein-based ingredients thus derived. However, early processing attempts at the co-precipitation of both proteins yielded products which possessed poor solubility characteristics, and thus were of limited use in food formulations.

The earliest work on the manufacture of acid co-precipitates from heated milk are described in U.S. Patent No. 2 623 038 of Scott. Described is a process in which alkali is added to skim milk to reduce its acidity and to prevent initial precipitation of protein when heating the milk to 90°C. The curd produced by acidification of the heated milk is separated from the whey, washed and dried. U.S. Patent No. 2 832 685 also by Scott describes the production of a soluble milk protein by dissolving a casein-lactalbumin fusion (also known as interaction or complex formation) in potassium hydroxide to neutral pH, increasing the pH to between 8.0 to 8.5 by the addition of ammonia followed by heating to 77 to 85°C and drying the solution. During drying ammonia was evaporated and the pH of the powder was reduced to between 6.6 and 7.3.

In general, prior art methods of producing co-precipitates have relied on conditioning of milk at its natural pH (typically 6.7 to 6.8) before precipitation, by use of heat treatment alone or in combination with the addition of calcium.

Conditioning is a classical processing step in the processing of co-precipitate in which the heat-induced interaction which takes place between casein and whey proteins (based specifically on kappa-casein/β-lactoglobulin fractions) is exploited. During the coagulation step that follows, the precipitation of whey protein along with casein is facilitated. Heat treatment takes place at about 80-90°C with a holding period, followed by acidification to induce precipitation of both casein and whey proteins at the isoelectric point. Variants of this process result in the production of co-precipitates with varying levels of calcium i.e. high-cal, medium-cal and low-cal. These specifications result from the addition of a calcium salt e.g. calcium chloride (CaCl₂) to milk before heat treatment in order to aid total protein recovery and improve the nature of the curd formed. These processes are generally referred to as traditional in that they are generally well-known, had reached a certain stage of commercial development in Australia and New Zealand in the 1960s and have been reviewed in an article by Southward and Goldman in Co-Precipitates - A Review, N.Z.J. Dairy Sci. Technol. 10 p. 101-112, (1975).

The product of these processes has limited functional properties in food applications as an ingredient due to its poor solubility.

European Patent No. 0 064 509 relates to a method of precipitating whey protein by use of a high alkaline pH, that is a pH above 9. Dairy whey and a normally acid insoluble protein which has an isoelectric point of between 4 and 5 are maintained at a temperature of about 55°C, and then alkalised to a pH of about 9 to 11, after which the mixture is acidified to a pH of about 2 to 4 and the pH is adjusted to the isoelectric point of the protein used in order to obtain whey protein and the protein as a precipitated protein complex. It appears necessary to use a second protein in order to "take out" the whey proteins".

This process promotes interaction of whey proteins with isoelectrically precipitable proteins by a process of alkylysing, acidification and isoelectric precipitation. The emphasis is placed on application to whey. However, exposure to a high alkaline pH is undesirable from a nutritional point of view.

Other processes for co-precipitation rely on the use of protein complexing agents such as polysaccharides (SU 1597154-A), polymers (RU 2010534-C1) or polyphosphates (IL 40215-A). These processes involve a non-isoelectric precipitation process which uses polymer interaction chemistry to initiate phase separation. These processes exploit different separation phenomena. The major disadvantage is the contamination of the protein with the complexing agent so that additional steps for recovery of the polymer are needed in order to reduce costs. Additionally effluent loadings may be high.

It is also known from European Patent No. 0 115 651 B to adjust the pH of milk to greater than 6.8 followed by heating to denature the protein, cooling and precipitation. The process involves moderate pH adjustment of milk on the alkaline side before heat treatment and acidification. This process avoids the classical casein/whey protein interaction by heating at a pH above 6.8, but it allows some whey protein aggregation.

European Patent No. 91369 B describes a process of acidifying milk below pH 3.5 using cationic resin without coagulation, and without high heat treatment. The acidification uses ion-exchange resins rather than direct acid injection. The process also relies on the blending of acidified milk at approximately pH 3 with raw skim milk to produce a coagulum of pH 4.6. The process essentially is an alternative process for casein manufacture with some increase in yield due to the incorporation of proteose peptone fractions from milk.

The process of the present invention enables both casein and whey proteins to be co-precipitated and isolated in a functional form. Additionally, the process has the advantage of improved yield in terms of casein manufacture by virtue of including the whey protein component of milk and also the resulting "whey" is deproteinated which saves on further processing costs to concentrate the whey protein separately. The process is also suitable for the manufacture of casein and caseinates with modified composition in accordance with Commission Regulation (EEC) No. 2921/90.

"Co-precipitate" is a traditional term which acknowledged the complex formation between two distinct proteins so that during coagulation there was a genuine co-precipitation phenomenon. In the process of the present invention this does not take place so it is considered that the present invention relates to the production of a milk protein ingredient.

According to the present invention there is provided a process for the manufacture of a total milk protein ingredient characterised in that skim milk is acidified to below pH 3.9 and heated to at least 50°C while at the acidic pH.

Temperatures greater than 50°C can be employed. For example, under atmospheric pressure milk can be heated up to 100°C and under appropriate pressurised conditions, temperatures above 100°C can be employed, such as in ultra-high temperature thermal processes.

Preferably the skim milk is chilled prior to acidification to a temperature of less than 30°C preferably less than 4°C.

Preferably the milk is subjected to rapid acid dosage and mixing following the chilling step. The mixture may then be heated to at least 50°C and held at that temperature for at least 5 minutes, preferably 10 minutes.

The skimmed milk initially used in the process should ideally have a fat content of 0.5% (w/v) or less.

The isoelectric point is generally considered to be pH 4.6 for milk proteins since bulk milk is used for processing and the value does not substantially vary from 4.6.

The pH may suitably be lowered by the use of mineral or organic acid addition. The most suitable acid for lowering the pH is hydrochloric acid, but other acids such as sulphuric acid or lactic acid may be used. The acid preferably is used to lower the pH to below 3.9, most preferably to between 2.5 and 3.5. Alternatively, ion-exchange or electrodialysis resin may be used to lower the pH.

Skimmed milk may be heid at 50°C or above for up to 30 minutes, although a holding time of 20 minutes is preferred and most preferably 10 minutes. The preferred temperature is above 75°C, more preferably 85 to 90°C, most preferably above 90°C. The coagulum is then cooled to below 90°C, preferably below 70°C. Following cooling, the pH is raised to between 4.0 and 5.0, preferably 4.6. The pH is raised by the addition of a strong base such as NaOH, KOH, NH₄OH, most preferably NaOH.

Preferably the precipitated curd is washed a number of times, preferably twice and separated from the supernatant wash water.

The precipitated curd may be separated from the supernatant wash water using a centrifugal separator, preferably a decanter centrifuge. Alternatively a centrifugal clarifier may be used.

In a particular aspect the invention provides a process for the manufacture of a total milk protein ingredient comprising the steps:
(a) skimmed milk is cooled to a temperature of less than 30°C, preferably 4°C or lower,
(b) the pH is reduced to below 3.9, preferably to between pH 2.5 and pH 3.5,
(c) the milk is heated to at least 50°C and held at that temperature for at least 5 minutes, preferably 10 minutes,
(d) the pH is raised to between 4.0 and 5.0,
(e) the product is allowed to coagulate, and
(f) the precipitated curd is separated from the supernatant.

The process of the present invention utilises the acid side of milk's natural pH in order to condition it for co-precipitation. The process thus uniquely acidifies skim milk, without incurring premature coagulation while passing through the isoelectric point. This is facilitated by the prior chilling step, before rapid acid dosage of the mixture followed by heating. The heat treatment plays a significant role in modifying the whey proteins so that they co-precipitate along with casein at the usual isoelectric pH of 4.6.

The invention also relates to a total milk protein ingredient whenever produced by the process.

### Example 1

Skim milk with a protein content of 3.44% was chilled to 3°C and fed into a vat with continuous pumping with optional variable speed controller.

There was continuous dosing of 4N HCl through a distributor inserted into the path of milk flow entering the coagulator. An in-line pH probe was linked to a set-point controller to regulate acid dosage of the milk to within pH 2.5-3.0. The flow path through the pipework of the coagulator created sufficient turbulence for acidification of the milk to reach equilibrium pH conditions rapidly.

The heating step is performed by a steam injection system connected to the coagulator which enabled the acidified milk temperature to reach approximately 70°C. On discharging the hot acidified milk into an agitated tank, further heating was provided using a jacketed heating system on the tank so as to reach 90°C.

The acidified milk was maintained at 90°C in the tank for 30 minutes, after which it was cooled to <80°C using chilled water flow through the jacket.

The pH was then readjusted to pH 4.6 using 4N NaOH; the light curd displayed good settling characteristics once the agitation system was stopped.

The coagulated skim milk was fed to a Westfalia Separator centrifugal clarifier model KNA 3 featuring bowl type CMB in order to separate the protein curd from the whey. In operating the separator using the clarifier mode, blank inserts were put in place of the 4 nozzles located on the periphery of the bowl.

The collected curd was mixed with R0 (reverse osmosis treated) water to make up to approximately 80% of the original volume of skim milk used and the clarification process was repeated (Table 2).

To solubilise the curd the washed curd was suspended using a Silverson mixer while neutralising to pH 7.0 at 50°C using 30% NaOH. A total solids content of 18% was recorded.

The solubilised proteinate concentrate was spray dried in an Anhydro pilot-scale spray drier, model LAB 3 using inlet and outlet temperatures of 190° and 90°C, respectively. The gross chemical composition of the proteinate is given in Table 3.

The soluble milk proteinate produced by the method which is the subject of this application comprises almost the full complement of casein and whey protein occurring in milk. It has a flavour which is superior to that of casein/caseinate products. It is also superior to similar products which are produced by means of exposing milk at an early stage in the process to high alkaline pH levels, that is greater than pH 8, as this leads to a reduction in the bio availability of essential amino acids such as lysine, and the increased risk of forming processing-based artifacts such as lysinoalanine.

**Table 1:**

| Effect of Holding Time at 90°C on the Total Protein content of whey: | |
|---|---|
| The efficiency of the proposed process in terms of maximising the recovery of whey protein is improved by holding the heated coagulum for a minimum period of 10 minutes at the acidic pH recommended (<pH 3.5). The data in the table that follows illustrates the residual protein content in the filtrate after readjustment of the pH to 4.6 (the filtrate was obtained in the laboratory by pouring a sample of the coagulum on a filter funnel). The results indicate that improvements in reducing the protein content of they whey by extending the holding time beyond 10 minutes are only marginal. | |

| **Sample Source** | **Total Protein (N x 6.38)** |
|---|---|
| ex-pipe (entry to tank) | 0.61 |
| 0 min | 0.44 |
| 10 min | 0.38 |
| 20 min | 0.37 |
| 30 min | 0.35 |
| skim milk | 3.71 |
| Clarified AMP whey (ex KNA 3) | 0.39 |

**Table 2:**

| Stepwise Curd Separation and Washing in Demonstrated Example: | | |
|---|---|---|
| **Step** | **Wash-water Volume** | **Notes** |
| Protein curd-whey separation | | Throughput: whey discharge rate from KNA 3 clarifier. 11.95 kg/min |
| Wash No. 1 | transferred separated curd (99.35 kg) back into CPC tank; added R0 water to restore to 80% original volume; | pH 4.92; temp 32°C |
| Protein curd-wash water separation | | KNA 3 clarifier |
| Wash No. 2 | similar to Wash No. 1 | pH 5.15; temp 31°C |
| Protein curd-wash water separation (repeat) | | KNA 3 clarifier |

**Table 3:**

| Proximate compositional analyses (spray dried proteinate): | |
|---|---|
| Total Protein | 91.76% |
| Ash | 3.51% |
| Moisture | 2.67% |

## Claims

1. A process for the manufacture of a total milk protein ingredient **characterised in that** skimmed milk is acidified to a pH below 3.9 and heated to at least 50°C while at the acidic pH.

2. A process as claimed in claim 1 wherein the skimmed milk is chilled prior to acidification to a temperature of less than 30°C, preferably less than 4°C.

3. A process as claimed in claim 2 wherein the skimmed milk is subjected to rapid acid dosage following chilling.

4. A process as claimed in claim 3 wherein the acid mixture is heated to at least 50°C and held at that temperature for at least 5 minutes and up to 30 minutes, preferably 20 minutes, most preferably 10 minutes.

5. A process as claimed in any preceding claim wherein the skimmed milk has a fat content of 0.5% (w/v) or less.

6. A process as claimed in any preceding claim wherein the skimmed milk is acidified by the use of a mineral or organic acid such as sulfuric acid, lactic acid or hydrochloric acid, preferably hydrochloric acid.

7. A process as claimed in any of claims 1 to 5 wherein ion exchange or an electrodialysis resin are used to lower the pH.

8. A process as claimed in any preceding claim wherein the skimmed milk is acidified to a pH between 2.5 and 3.5.

9. A process as claimed in any preceding claim wherein the skimmed milk is held at a temperature above 75°C, more preferably between 85 and 90°C and most preferably above 90°C.

10. A process as claimed in any preceding claim wherein the coagulated skimmed milk is cooled, following heating to 50°C, to a temperature below 90°C preferably below 70°C.

11. A process as claimed in claim 10 wherein, following cooling, the pH of the coagulum is raised to between 4.0 and 5.0, preferably 4.6.

12. A process as claimed in claim 11 wherein the pH is raised by the addition of a strong base such as sodium hydroxide, potassium hydroxide or ammonium hydroxide, most preferably sodium hydroxide.

13. A process as claimed in claim 12 wherein precipitated curd is washed, preferably twice, and separated from the supernatant wash water, preferably using a centrifugal separator or a centrifugal clarifier.

14. A process for the manufacture of a total milk protein ingredient comprising the steps:
(a) skimmed milk is cooled to a temperature of less than 30°C, preferably 4°C or lower,
(b) the pH is reduced to below 3.9,
(c) the milk or whey is heated to at least 50°C and held at that temperature for at least 5 minutes,
(d) the pH is raised to between 4.0 and 5.0,
(e) the product is allowed to coagulate, and
(f) the precipitated curd is separated from the supernatant.

15. A total milk protein ingredient obtainable by a process as claimed in any preceding claim.

## Patentansprüche

1. Verfahren zur Herstellung eines Gesamtmilchproteinzusatzstoffes, **dadurch gekennzeichnet, dass** entrahmte Milch auf einen pH-Wert unter 3,9 angesäuert wird und auf wenigstens 50°C erhitzt wird, während sich der pH-Wert im sauren Bereich befindet.

2. Verfahren gemäß Anspruch 1, wobei die entrahmte Milch vor der Ansäuerung auf eine Temperatur unter 30°C, bevorzugt unter 4°C gekühlt wird.

3. Verfahren gemäß Anspruch 2, wobei die entrahmte Milch nach dem Kühlen einer schnellen Säuredosierung unterzogen wird.

4. Verfahren gemäß Anspruch 3, wobei die saure Mischung auf wenigstens 50°C erhitzt wird und wenigstens 5 Minuten und bis zu 30 Minuten lang, bevorzugt 20 Minuten lang, und ganz besonders bevorzugt 10 Minuten lang, auf dieser Temperatur belassen wird.

5. Verfahren gemäß irgendeinem der vorangehenden Ansprüche, wobei die entrahmte Milch einen Fettgehalt von 0,5% (Gew./Vol.) oder weniger aufweist.

6. Verfahren gemäß irgendeinem der vorangehenden Ansprüche, wobei die entrahmte Milch mit einer Mineralsäure oder einer organischen Säure, wie zum Beispiel Schwefelsäure, Milchsäure oder Salzsäure, bevorzugt Salzsäure, angesäuert wird.

7. Verfahren gemäß irgendeinem der Ansprüche 1 bis 5, wobei ein Ionenaustausch- oder ein Elektrodialyseharz zur Senkung des pH-Wertes verwendet werden.

8. Verfahren gemäß irgendeinem der vorangehenden Ansprüche, wobei die entrahmte Milch auf einen pH-Wert zwischen 2,5 und 3,5 angesäuert wird.

9. Verfahren gemäß irgendeinem der vorangehenden Ansprüche, wobei die entrahmte Milch auf einer Temperatur über 75°C belassen wird, besonders bevorzugt zwischen 85°C und 90°C und ganz besonders bevorzugt über 90°C.

10. Verfahren gemäß irgendeinem der vorangehenden Ansprüche, wobei die koagulierte entrahmte Milch nach dem Erhitzen auf 50°C auf eine Temperatur unter 90°C, bevorzugt unter 70°C gekühlt wird.

11. Verfahren gemäß Anspruch 10, wobei, nach dem Kühlen, der pH-Wert des Koagulums auf zwischen 4,0 und 5,0, bevorzugt auf 4,6 angehoben wird.

12. Verfahren gemäß Anspruch 11, wobei der pH-Wert durch die Zugabe einer starken Base wie zum Beispiel Natriumhydroxid, Kaliumhydroxid oder Ammoniumhydroxid angehoben wird, ganz besonders bevozugt durch Natriumhydroxid.

13. Verfahren gemäß Anspruch 12, wobei die präzipitierte geronnene Milch gewaschen wird, bevorzugt zweimal, und von dem Waschwasserüberstand getrennt wird, wobei bevorzugt ein Zentrifugalseparator oder eine Klärzentrifuge verwendet wird.

14. Verfahren zur Herstellung eines Gesamtmilchproteinzusatzstoffes, umfassend die Schritte:
(a) entrahmte Milch wird auf eine Temperatur unter 30°C, bevorzugt 4°C oder weniger, gekühlt,
(b) der pH-Wert wird auf unter 3,9 gesenkt,
(c) die Milch oder Molke wird auf wenigstens 50°C erhitzt und für wenigstens 5 Minuten auf dieser Temperatur belassen,
(d) der pH-Wert wird auf 4,0 bis 5,0 erhöht,
(e) das Produkt wird koagulieren gelassen, und
(f) die präzipitierte geronnene Milch wird vom Überstand getrennt.

15. Gesamtmilchproteinzusatzstoff, erhältlich durch ein Verfahren gemäß irgendeinem der vorangehenden Ansprüche.

## Revendications

1. Procédé pour la fabrication d'un ingrédient de protéine de lait totale, **caractérisé en ce que** le lait écrémé est acidifié à un pH en dessous de 3,9 et chauffé à au moins 50 °C à pH acide.

2. Procédé selon la revendication 1, dans lequel le lait écrémé est refroidi avant l'acidification à une température inférieure à 30 °C, de préférence inférieure à 4 °C.

3. Procédé selon la revendication 2, dans lequel le lait écrémé est soumis à un dosage d'acide rapide après le refroidissement.

4. Procédé selon la revendication 3, dans lequel le mélange acide est chauffé à au moins 50 °C et maintenu à cette température pendant au moins 5 minutes et jusqu'à 30 minutes, de préférence 20 minutes, mieux encore 10 minutes.

5. Procédé selon l'une quelconque des revendications précédentes, dans lequel le lait écrémé présente une teneur en graisse de 0,5 % (p/v) ou moins.

6. Procédé selon l'une quelconque des revendications précédentes, dans lequel le lait écrémé est acidifié par l'utilisation d'un acide minéral ou d'un acide organique comme l'acide sulfurique, l'acide lactique ou l'acide chlorhydrique, de préférence l'acide chlorhydrique.

7. Procédé selon l'une quelconque des revendications 1 à 5, dans lequel une résine échangeuse d'ions ou une résine d'électrodialyse est utilisée pour abaisser le pH.

8. Procédé selon l'une quelconque des revendications précédentes, dans lequel le lait écrémé est acidifié à un pH compris entre 2,5 et 3,5.

9. Procédé selon l'une quelconque des revendications précédentes, dans lequel le lait écrémé est maintenu à une température supérieure à 75°C, de préférence comprise entre 85 et 90 °C, et mieux encore au dessus de 90 °C.

10. Procédé selon l'une quelconque des revendications précédentes, dans lequel le lait écrémé coagulé est refroidi, après un chauffage à 50 °C, à une température en dessous de 90 °C, de préférence en dessous de 70 °C.

11. Procédé selon la revendication 10, dans lequel après le refroidissement, le pH du coagulum est élevé entre 4,0 et 5,0, de préférence à 4,6.

12. Procédé selon la revendication 11, dans lequel le pH est élevé par l'addition d'une base forte comme de l'hydroxyde de sodium, de l'hydroxyde de potassium ou de l'hydroxyde d'ammonium, de préférence de l'hydroxyde de sodium.

13. Procédé selon la revendication 12, dans lequel le caillé précipité est lavé, de préférence deux fois, et séparé de l'eau de lavage du surnageant en utilisant, de préférence, un séparateur centrifuge ou un dispositif de clarification centrifuge.

14. Procédé pour la fabrication d'un ingrédient de protéine de lait totale comprenant les étapes de :
(a) du lait écrémé est refroidi à une température inférieure à 30 °C, de préférence 4 °C ou moins,
(b) le pH est réduit en dessous de 3,9,
(c) le lait ou le petit lait est chauffé à au moins 50 °C et maintenu à cette température pendant au moins 5 minutes,
(d) le pH est élevé à une valeur comprise entre 4,0 et 5,0,
(e) le produit est amené à coaguler, et
(f) le caillé précipité est séparé du surnageant.

15. Un ingrédient de protéine de lait totale apte à être obtenu par un procédé selon l'une quelconque des revendications précédentes.
